# EUROPÄISCHE PATENTANMELDUNG

(11) **EP 2 141 112 A1**
(43) Veröffentlichungstag der Anmeldung: **06.01.2010**
(21) Anmeldenummer: 09007742.1
(22) Anmeldetag: 12.06.2009
(51) Int. Cl.: B66F 3/08, B66F 17/00, F16H 25/20

(54) **Stelleinrichtung zum Positionieren einer Last**

(30) Priorität: 02.07.2008 AT 10502008
(71) Anmelder: Zimmermann, Jürgen, 6900 Bregenz (AT)
(72) Erfinder: Rangger, Peter, 6850 Dornbirn (AT); Zimmermann, Jürgen, 6900 Bregenz (AT)
(74) Vertreter: Hofmann, Ralf U.

(57) **Zusammenfassung**

Stelleinrichtung zum Positionieren einer Last mit einer Spindel (2) und einer auf dieser angeordneten Spindelmutter (3) sowie mindestens einem Endschalter (17,18) zum Abschalten eines die Stelleinrichtung antreibenden Antriebsmotors (4) an einer vorgegebenen Stellposition der Endschalter (17,18) von einem in Längsrichtung der Spindel (2) verschiebbar gelagerten Schlitten (22,23) getragen, der eine Gewindebohrung aufweist, in deren Gewinde eine drehbar gelagerte, parallel zur Spindel (2) ausgerichtete Gewindestange (25,26) eingreift, durch deren Drehung der Schlitten (22,23) in Längsrichtung der Spindel (2) verstellbar ist.

## Beschreibung

Die Erfindung bezieht sich auf eine Stelleinrichtung zum Positionieren einer Last mit einer Spindel und einer auf dieser angeordneten Spindelmutter sowie mindestens einem Endschalter zum Abschalten eines die Stelleinrichtung antreibenden Antriebsmotors an einer vorgegebenen Stellposition.

Derartige Stelleinrichtungen, die auch als Spindelhubgetriebe, Spindelmuttergetriebe oder Stellantriebe bezeichnet werden, dienen der Positionierung von Bauteilen oder Baugruppen. Beispielsweise kommen solche Stelleinrichtungen bei Hubtischen, Hebeböcken, höhenverstellbaren Bühnen, Ventilen mit motorisch verstellbaren Ventilschiebern, motorisch verstellbaren Betonschalungen, Sonnenstand-Nachführeinrichtungen für Photovoltaik-Anlagen usw. zum Einsatz.

Bei diesen Stelleinrichtungen werden drehende Bewegungen von Antriebsmotoren in lineare Bewegungen umgesetzt. Bei einer ersten Art von Spindelhubgetrieben ist eine Spindelmutter drehbar in einem Gehäuse gelagert und verstellt bei ihrer Drehung eine unverdrehbare Spindel in achsialer Richtung. Bei der zweiten Art ist die Spindel drehbar im Gehäuse gelagert ist und durch Drehung der Spindel wird eine auf ihrem Außengetriebe angeordnete und gegen Verdrehung gesicherte Spindelmutter in achsialer Richtung der Spindel verstellt.

Beispielsweise gehen derartige Stelleinrichtungen mit achsial verschiebbaren Spindeln oder achsial verschiebbaren Spindelmuttern aus der EP 1 619 414 A2, EP 1 473 268 A2 und EP 1 741 664 A2 hervor. In der letztgenannten Schrift ist ein Spindelhubgetriebe mit einer achsial verschiebbaren Spindelmutter beschrieben, bei der zur drehbaren Lagerung der Spindel diese über einen konischen Abschnitt und einen zylindrischen Abschnitt mit entsprechenden Aufnahmeabschnitten eines im Gehäuse drehbar gelagerten Trägerzahnrads verbunden ist. Das Trägerzahnrad steht mit einem von einem Antriebsmotor antreibbaren Antriebszahnrad in Eingriff.

Üblicherweise umfassen derartige Spindelhubtriebe mechanisch betätigbare Endschalter, durch welche die Bewegung der achsial verstellbaren Spindelmutter oder der achsial verstellbaren Spindel an vorgesehenen Endpositionen gestoppt wird. Hierzu ist bei einer achsial verstellbaren Spindel ein Auslöseteil, beispielsweise Schaltnocken, im Bereich desjenigen Endes der Spindel angebracht, welches einem mit dem zu verstellenden Teil zusammenwirkenden Betätigungsende der Spindel gegenüberliegt. Im Fall einer achsial verstellbaren Spindelmutter ist das Auslöseteil an der Spindelmutter angebracht. An den vorgesehenen Endpositionen der Verstellung betätigt das Auslöseteil jeweils einen Endschalter. Beispielsweise gehen für Stelleinrichtungen mit achsial verstellbaren Spindeln solche Endschalter aus der EP 1 473 268 A2 und aus der EP 1 870 914 A2 hervor. Die Endschalter sind auf ein die Spindel umgebendes Rohr aufgeschraubt und ein Auslöseteil des Endschalters durchsetzt eine Fensteröffnung in diesem Rohr. Nachteilig hierbei ist es, dass je nach Anwendung unterschiedliche Stellbereiche vorgegeben sind, sodass die Vorbereitung der Rohre und Montage der Endschalter, mit Ausbildung entsprechender Fensteröffnungen, und Montage der Endschalter jeweils individuell erfolgen muss.

Aufgabe der Erfindung ist es eine Stelleinrichtung der eingangs genannten Art bereitzustellen, bei der die Anpassung an unterschiedliche Anwendungen mit unterschiedlichen Stellbereichen erleichtert wird. Erfindungsgemäß gelingt dies durch eine Stelleinrichtung mit den Merkmalen des Anspruchs 1.

Bei der Stelleinrichtung der Erfindung kann die Position mindestens eines Endschalters und somit die durch die Position dieses Endschalters vorgegebene Endposition der Verstellung durch Drehung der Gewindestange verändert werden. Das Außengewinde der Gewindestange steht im Eingriff mit dem Innengewinde der Gewindebohrung des Schlittens, sodass durch Drehung der Gewindestange der Schlitten und mit ihm der von ihm getragene Endschalter in achsialer Richtung der Gewindestange bzw. Spindel verschoben werden kann.

Vorteilhafterweise ist der Schlitten in einer Führungsschiene, die parallel zur Spindel angeordnet ist, verschiebbar geführt. Diese Führungsschiene ist fest mit dem Gehäuse der Stelleinrichtung verbunden.

In einer vorteilhaften Ausführungsform der Erfindung ist die Spindel im Gehäuse drehbar gelagert und ein Auslöseteil für den Endschalter, beispielsweise ein Schaltnocken, ist an der bei der Verdrehung der Spindel achsial verstellbaren Spindelmutter oder einem an dieser angebrachten Teil festgelegt.

In einer anderen Ausführungsform kann die Spindelmutter im Gehäuse drehbar gelagert sein und durch Drehung der Spindelmutter die Spindel achsial verstellt werden. Das den Endschalter betätigende Auslöseteil, beispielsweise in Form eines Schaltnockens, ist hierbei an der Spindel oder an einem an dieser angebrachten Teil festgelegt, insbesondere in einem Endbereich der Spindel, welcher auf der Seite des Gehäuses aus diesem herausragt, die dem Stellende gegenüberliegt, mit welchem die Spindel mit einem zu verstellenden Teil verbindbar ist.

Weitere Vorteile und Einzelheiten der Erfindung werden im Folgenden anhand der beiliegenden Zeichnung erläutert. In dieser zeigen:
Fig. 1 eine Schrägsicht einer erfindungsgemäßen Stelleinrichtung, das Hüllrohr teilweise aufgebrochen;
Fig. 2 ein vergrößertes Detail A von Fig. 1;
Fig. 3 ein vergrößertes Detail B von Fig. 1;
Fig. 4 eine Schrägsicht des Stellantriebs von Fig. 1 aus einer anderen Blickrichtung, das Hüllrohr teilweise aufgebrochen;
Fig. 5 ein vergrößertes Detail C von Fig. 4;
Fig. 6 eine Seitenansicht der Stelleinrichtung;
Fig. 7 einen Teilschnitt der Stelleinrichtung entlang der Linie DD von Fig. 6;
Fig. 8 einen Schnitt entlang der Linie EE von Fig. 6;
Fig. 9 einen Schnitt entlang der Linie FF von Fig. 8;
Fig. 10 einen Schnitt entlang der Linie GG von Fig. 8;
Fig. 11 eine Schrägsicht des an der Spindelmutter angebrachten Flanschteils mit den Gleitern (einer der Gleiter ist aus der Aufnahmenut herausgenommen);
Fig. 12 eine Schrägsicht der Spindelmutter und der Sicherheitsfangmutter im getrennten Zustand;
Fig. 13 eine stark schematisierte Darstellung eines weiteren Ausführungsbeispiels der Erfindung.

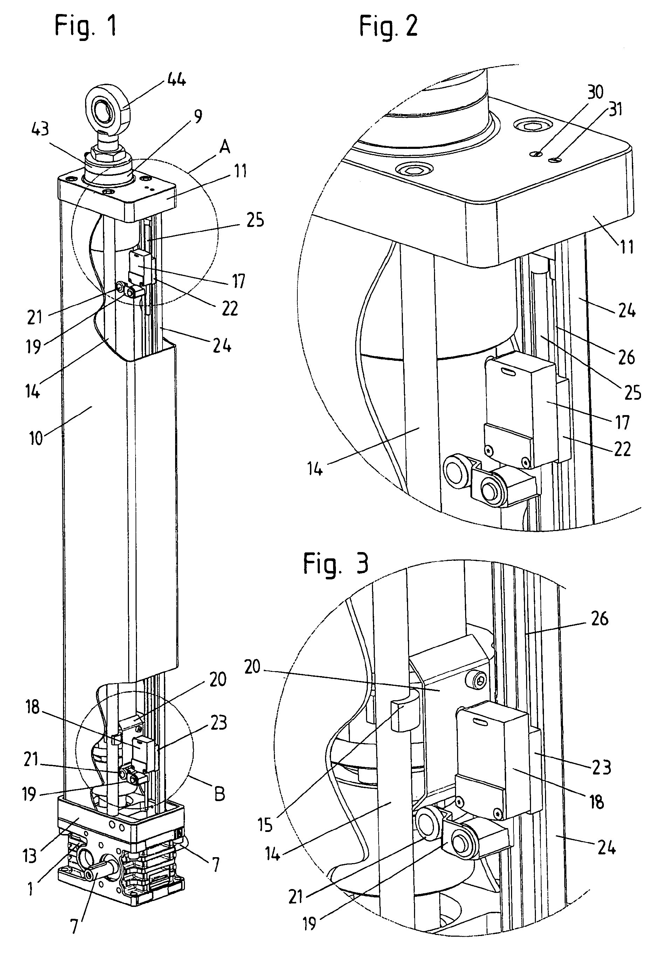

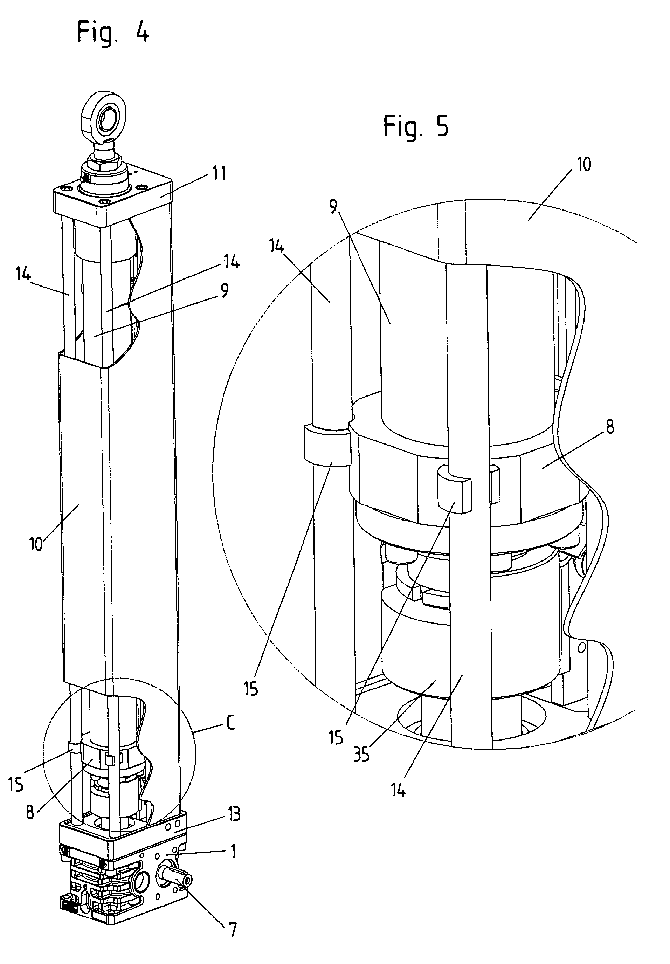

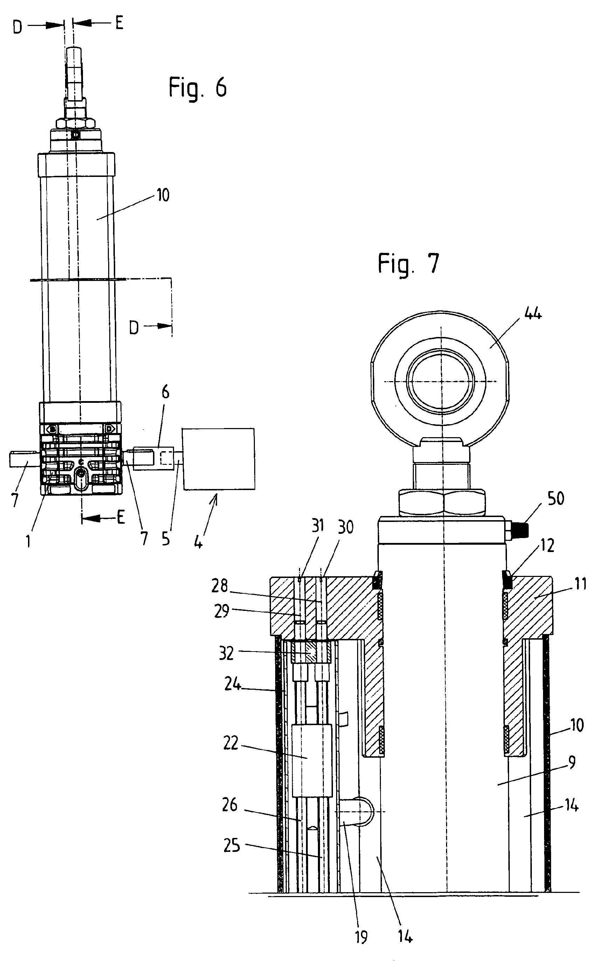

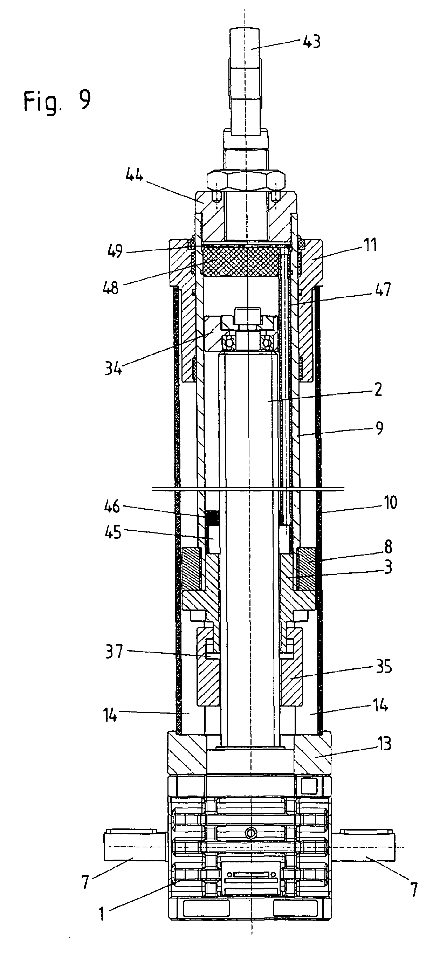

Die Stelleinrichtung gemäß dem in den Fig. 1 bis 12 dargestellten Ausführungsbeispiel der Erfindung umfasst eine in einem Gehäuse 1 drehbar, achsial unverschiebbar gelagerte Spindel 2, auf deren Außengewinde eine mit dem Außengewinde in Gewindeeingriff stehende Spindelmutter 3 aufgeschraubt ist. Zur Drehung der Spindel dient ein nur in Fig. 6 schematisch dargestellter Antriebsmotor 4, dessen Motorwelle 5 beispielsweise über eine Kupplung 6 mit einer Antriebswelle 7 der Stelleinrichtung verbunden ist, die im gezeigten Ausführungsbeispiel an gegenüberliegenden Seiten des Gehäuses 1 aus diesem heraustritt und über dieses vorsteht.

Die Antriebswelle 7 ist mit einem im Gehäuse 1 angeordneten Antriebszahnrad, beispielsweise einer Schnecke, drehbar verbunden, welches mit einem Trägerzahnrad, beispielsweise einem Schneckenrad, kämmt, das mit der Spindel 2 drehfest verbunden ist. Die drehbare Lagerung der Spindel 2 im Gehäuse 1 kann über dieses Trägerzahnrad erfolgen, welches drehbar im Gehäuse 1 gelagert ist. Das Antriebszahnrad und das Trägerzahnrad sowie dessen drehbare Lagerung im Gehäuse und dessen Verbindung mit der Spindel 2 sind in den Figuren nicht dargestellt. Diese Teile können in herkömmlicher Weise ausgebildet sein, beispielsweise wie in der in der Beschreibungseinleitung genannten EP 1 741 664 A2 beschrieben.

Die Spindelmutter 3 ist über ein an der Spindelmutter 3 angeschraubtes Flanschteil 8 mit einem Schubrohr 9 verbunden, welches sich somit bei einer achsialen Verstellung der Spindelmutter 3 mit dieser mitbewegt. Das Schubrohr 9 besitzt an seinem Verbindungsende mit dem Flanschteil 8 ein Außengewinde, welches in ein Innengewinde des Flanschteils 8 eingeschraubt ist. Die Verbindung des Schubrohrs 9 mit dem Flanschteil 8 und/oder die Verbindung des Flanschteils 8 mit der Spindelmutter 3 könnte auch in anderer Weise erfolgen. Auch eine direkte Befestigung des Schubrohrs 9 an der Spindelmutter 3 ist denkbar und möglich.

Das Schubrohr 9 umgibt mit einem jener Stellung der Spindelmutter 3 auf der Spindel 2 mehr oder weniger großen Abschnitt seiner Längserstreckung die Spindel 2.

Das Schubrohr 9 ist je nach Stellung der Spindelmutter 3 über einen mehr oder weniger großen Abschnitt seiner Längserstreckung in einem von einem Hüllrohr 10 umschlossenen Aufnahmeraum aufgenommen. Das Schubrohr 9 durchsetzt hierbei ein im Bereich des vom Gehäuse 1 abgelegenen Endes des Hüllrohrs 10 achsial an diesem sich abstützendes Deckelteil 11. Vorzugsweise verschließt dieses Deckelteil 11 das Hüllrohr 10 und das Schubrohr 9 durchsetzt eine Durchtrittsöffnung im Deckelteil 11 und ist gegenüber dieser Durchtrittsöffnung im Deckelteil 11 abgedichtet. Hierzu kann mindestens ein am Deckelteil 11 angeordneter und an der äußeren Mantelfläche des Hüllrohrs 10 anliegender Dichtring 12 vorgesehen sein.

Durch die Drehung der Spindel 2 ist somit das Schubrohr 9 gegenüber dem Hüllrohr 10 teleskopierbar.

Die Längsachsen des Schubrohrs 9, Hüllrohrs 10 und der Spindel 2 liegen parallel zueinander.

An einem am Gehäuse 1 befestigten Anschlussteil 13 sind Zugstangen 14 befestigt, an deren vom Gehäuse 1 abgelegenen Enden das Deckelteil 11 angeschraubt ist. Hierbei wird das Hüllrohr 10 zwischen dem Deckelteil 11 und dem Anschlussteil 13 verspannt. Das Anschlussteil 13 könnte auch entfallen und die Befestigung der Zugstangen 14 direkt am Gehäuse 1 und die Verspannung des Hüllrohrs 10 ebenfalls direkt mit dem Gehäuse 1 erfolgen. Die Zugstangen 13 sind bevorzugterweise innerhalb des Hüllrohrs 10 angeordnet.

Die Zugstangen 14 sind an den Eckpunkten eines gedachten Vierecks angeordnet und diese Zugstangen dienen auch zur Verdrehsicherung der Spindelmutter 3. Hierzu sind Gleiter 15 vorgesehen, die von den Zugstangen 14 in Längsrichtung der Zugstangen 14 verschiebbar gelagert sind und an denen sich das Flanschteil 8 gegen eine Verdrehung abstützt. Ein jeweiliger Gleiter 15 kann hierbei wie dargestellt in eine Aufnahmenut 16 in der Mantelfläche des Flanschteils 8 eingreifen, um den Gleiter 15 in achsialer Richtung der Spindel 2 gegenüber dem Flanschteil 8 unverschiebbar zu halten. Der Gleiter 15 liegt hierbei mit einem zylindermantelförmigen Abschnitt seiner Mantelfläche am zylindermantelförmigen Boden der Aufnahmenut 16 an, sodass er gegenüber dem Flanschteil 8 (und somit gegenüber der Spindelmutter 3) um eine parallel zu den Zugstangen 14 bzw. zur Spindel 2 liegende Achse verschwenkbar ist.

Ein jeweiliger Gleiter 15 ist im gezeigten Ausführungsbeispiel teilringförmig ausgebildet und umgreift eine Zugstange 14 über einen Teil ihres Umfangs. Im nicht vom Gleiter 15 umgriffenen Abschnitt ihres Umfangs liegt eine jeweilige Zugstange 14 am Hüllrohr 10 an. Bei einer Biegebelastung der Zugstangen 14, die durch ein auf die Spindelmutter 3 einwirkendes Drehmoment bewirkt wird, können sich die Zugstangen 14 auf diese Weise am Hüllrohr 10 abstützen.

Die Gleiter 15 bestehen vorzugsweise aus Kunststoff. Insbesondere kann ein trockenlaufgeeignetes Material herangezogen werden, sodass keine Schmierung erforderlich ist. Solche Materialien sind bekannt. Z.B. können die Gleiter aus Polyamid, speziell Polyamid 6.6 mit MoS2 (DIN Kurzzeichen: PA 6.6 Mo) bestehen.

Zum Abschalten des Antriebsmotors 4 in vorgesehenen Endstellungen der Spindelmutter 3 dienen Endschalter 17, 18. Diese weisen im dargestellten Ausführungsbeispiel jeweils einen Kipphebel 19 auf, der gegenüber einer Ausgangsstellung um +/- 90° verschwenkbar ist. In der in den Figuren dargestellten Ausgangsstellung ist der Endschalter 17, 18 geschlossen und vor Erreichen der um 90° verschwenkten Endposition des Kipphebels 19 wird der Endschalter 17, 18 geöffnet. Der Kipphebel 19 wirkt mit einem in Form eines Schaltnockens ausgebildeten Auslöseteil 20 zusammen, das am Flanschteil 8 festgelegt ist. Auch eine Befestigung direkt an der Spindelmutter 3 ist denkbar und möglich. Am Ende des Kipphebels 19 ist eine mit dem Auslöseteil 20 zusammenwirkende Rolle 21 drehbar gelagert. Auch ein gleitendes Zusammenwirken des Kipphebels 19 mit dem Auslöseteil 20 ohne eine Rolle 21 ist denkbar und möglich. Weiters könnte ein jeweiliger Endschalter 17, 18 anstelle eines verschwenkbaren Kipphebels 19 zur Betätigung auch einen linear verschiebbaren Schaltstößel aufweisen. Endschalter 17, 18 mit Kipphebeln 19 oder Schaltstö-ßeln sind bekannt.

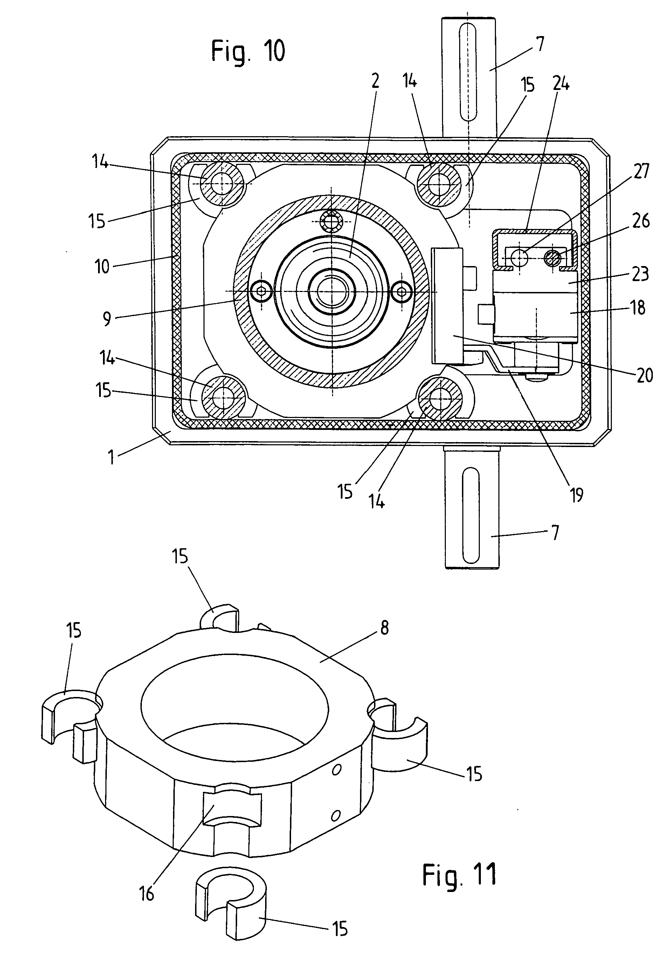

Ein jeweiliger Endschalter 17, 18 ist an einem Schlitten 22, 23 befestigt. Die Schlitten 22, 23 sind in einer gemeinsamen Führungsschiene 24, welche parallel zur Spindel 22 angeordnet ist, in Längsrichtung der Spindel verschiebbar geführt. Die Führungsschiene 24 ist durch Befestigung am Anschlussteil 13 gehäusefest gehalten. Zur Halterung der Schlitten 22, 23 in einer vorgegebenen Position und zur Verschiebung der Schlitten 22, 23 in Längsrichtung der Führungsschiene 24 dienen Gewindestangen 25, 26. Die Gewindestangen 25, 26 sind drehbar aber in achsialer Richtung der Spindel 2 unverschiebbar gelagert. Die eine Gewindestange 25 durchsetzt eine Gewindebohrung im Schlitten 22 und ist mit ihrem Gewinde mit dem Gewinde der Gewindebohrung in Eingriff. Die andere Gewindestange 26 durchsetzt eine Durchgangsbohrung im Schlitten 22 mit Spiel und durchsetzt weiters eine Gewindebohrung im Schlitten 23 und steht mit ihrem Gewinde mit dem Gewinde der Gewindebohrung im Schlitten 23 in Eingriff. Die mit der Gewindebohrung des Schlittens 22 in Eingriff stehende Gewindestange 25 endet vor dem Verstellbereich für den Schlitten 23, wie dies beispielsweise aus Fig. 1 ersichtlich ist. Die von der Gewindestange 26 mit Spiel durchsetzte Durchgangsbohrung im Schlitten 22 ist analog zu der in Fig. 10 ersichtlichen Durchgangsbohrung 27 im Schlitten 23 ausgebildet, welche hier ohne Funktion ist. Die Schlitten 22, 23 können vorteilhafterweise identisch ausgebildet und um 180° gegeneinander verdreht in die Führungsschiene 24 eingesetzt sein. Die Gewindestange 25 könnte sich auch durch die Durchgangsbohrung 27 im Schlitten 23 mit Spiel erstrecken.

Die die Schlitten 22, 23 führende Führungsschiene 24 ist im Querschnitt C-förmig ausgebildet (vgl. Fig. 10).

Der Endschalter 17 dient zur Abschaltung des Antriebsmotors 4 in einer vom Gehäuse 1 entfernten Endposition des möglichen Stellweges der Spindelmutter 3 und der Endschalter 18 dient zur Abschaltung des Antriebsmotors 4 in einer demgegenüber näher beim Gehäuse 1 liegenden Endposition des möglichen Stellweges der Spindelmutter 3.

Die Gewindestangen 25, 26 ragen jeweils mit einem Endstück 28, 29 in eine Durchgangsbohrung im Deckelteil 11 (vgl. insbesondere Fig. 7). An ihren Enden weisen sie jeweils einen Werkzeugansatz 30, 31 auf, z.B. ein Schlitz, der zum Verdrehen der jeweiligen Gewindestange 25, 26 mit einem Drehwerkzeug, beispielsweise Schraubenzieher dient. Im gezeigten Ausführungsbeispiel schließen die Endstücke 28, 29 etwa bündig mit der äußeren Oberfläche des Deckelteils 11 ab. Sie könnten über diese auch vorstehen. Vorzugsweise sind die Endstücke gegenüber dem Deckelteil abgedichtet. Beispielsweise können sie eine Umfangsnut mit einem darauf angeordneten Dichtring aufweisen, der an der Mantelfläche der Durchgangsbohrung im Deckelteil 11 anliegt.

Die Drehung der Gewindestangen 25, 26 und somit die Verstellung der Endschalter 17, 18 kann somit im gleichen Bereich der Stelleinrichtung erfolgen, nämlich von oberhalb des Deckelteils 11.

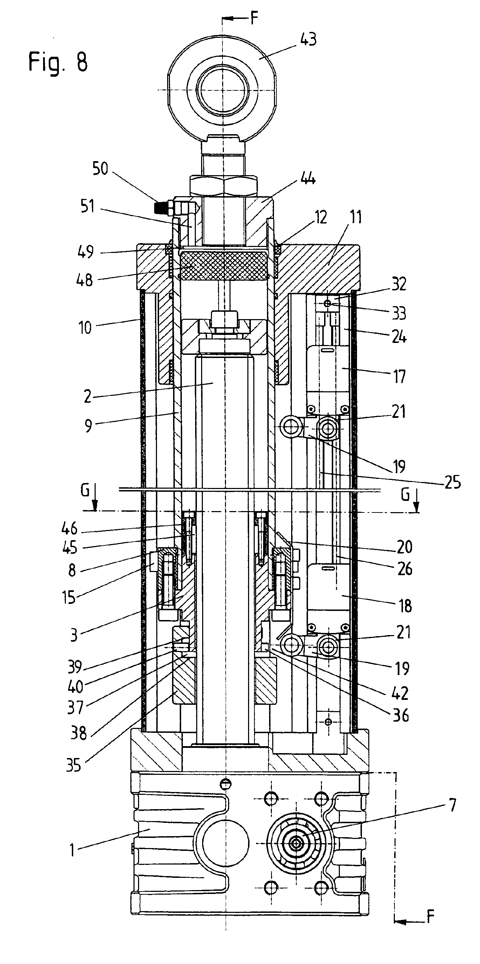

Zur achsial gegenüber dem Gehäuse 1 unverschiebbaren Halterung der Gewindestangen 25, 26 dient im gezeigten Ausführungsbeispiel ein Halteteil 32. Dieses ist klemmend in der C-förmigen Führungsschiene 24 gehalten, beispielsweise mit einer Klemmschraube 33 (vgl. Fig. 8), die eine Gewindebohrung des Halteteils 32 durchsetzt und sich am Basisschenkel der Führungsschiene 24 abstützt und das Halteteil 32 gegen die gegeneinander gerichteten, den Schlitz des C-Profils begrenzenden Schenkel andrückt. Zwischen dem Deckelteil 11 und dem Halteteil 32 liegen Klemmringe (Seeger-Ringe), die auf Nuten der Endstücke 28, 29 der Gewindestangen 25, 26 aufgeschnappt sind.

Die Endstücke 28, 29 sind im gezeigten Ausführungsbeispiel separate Teile, die drehfest mit den die Außengewinde aufweisenden Hauptabschnitten der Gewindestangen 25, 26 verbunden sind, beispielsweise durch Verschweißung.

Auch andere in achsialer Richtung der Spindel 2 gegenüber dem Gehäuse 1 unverschiebbare, aber drehbare Lagerungen von Gewindestangen 25, 26 sind denkbar und möglich. Die Gewindestangen 25, 26 können hierbei auch jeweils einstückig ausgebildet sein.

Auf dem vom Gehäuse 1 abgelegenen Ende der Spindel 2 ist ein mit der Spindel 2 über ein Wälzlager drehbar verbundenes Lagerteil 34 drehbar gelagert. Das Lagerteil 34 ist verschiebbar im Schubrohr 9 geführt, wobei vorzugsweise seine Außenkontur zur Innenkontur des Schubrohrs 9 korrespondierend ausgebildet ist. Auf diese Weise ist das vom Gehäuse 1 abgelegene Ende der Spindel 2 im Schubrohr 9 radial ausgerichtet.

Die Spindelmutter 3 ist drehfest aber achsial verschiebbar mit einer Sicherheitsfangmutter 35 verbunden, die mit ihrem Innengewinde mit dem Außengewinde der Spindel 2 in Gewindeeingriff steht. Mit der Sicherheitsfangmutter 35 wird eine Sicherheitsfunktion für den Fall eines Gewindedurchbruchs der Spindelmutter 3 ausgebildet. Im Falle eines Gewindedurchbruchs der Spindelmutter 3 schlägt ein Ringflansch 36 der Spindelmutter 3 je nach Belastungsrichtung der Spindelmutter 3 an eine der beiden einen Aufnahmeraum 37 für den Ringflansch 36 in achsialer Richtung der Spindel 2 begrenzenden Anschlagflächen 38, 39 an.

Zur Drehmitnahme der Sicherheitsfangmutter 35 dient ein Stift 40, der in eine Nut 41 im Ringflansch 36 ragt.

Der Aufnahmeraum 37 weist in radialer Richtung eine Einführöffnung 42 auf. Bei der Montage kann der Ringflansch 36 durch diese Einführöffnung 42 in den Aufnahmeraum 37 eingeführt werden, wodurch eine sehr einfache Montage ermöglicht wird.

Das vom Gehäuse 1 abgelegene Ende des Schubrohrs 9 ist mit einem Anschlussteil 43 zur Verbindung mit dem von der Stelleinrichtung zu verstellenden Teil verbunden. Die Verbindung kann beispielsweise über ein in das Schubrohr 9 eingeschraubtes und dieses verschließendes Endstück 44 erfolgen. Z.B. ist das Anschlussteil 43 in das Endstück 44 eingeschraubt.

Zur Schmierung der Spindelmutter 3 ist eine Fettkammer 45 ausgebildet. Hierzu ist ein Kammerteil 46 auf die Spindelmutter 3 aufgeschraubt. In die Fettkammer 45 mündet ein Zuführrohr 47 (vgl. Fig.). Im Schubrohr 9 ist im Abstand zum Endstück 44 ein Begrenzungsstück 48 gehalten. Der Zwischenraum 49 zwischen dem Begrenzungsstück 48 und dem Endstück 44 kommuniziert mit dem inneren Kanal des Zuführrohrs 47. Die Zuführung von Fett erfolgt durch einen in das Endstück 44 eingesetzten Schmiernippel 50, wobei das Fett über eine Bohrung 51 im Endstück 44 in den Zwischenraum 49 und weiter über das Zuführrohr 47 in die Fettkammer 45 gelangt.

Um die Endschalter 17, 18 an die für die jeweilige Anwendung gewünschte Stelle zu positionieren, um den Antriebsmotor 4 an den gewünschten Stellpositionen des Stellantriebs abzuschalten, werden die Endschalter 17, 18 in der Führungsschiene 24 durch Drehung der Gewindestangen 25, 26 entsprechend verstellt.

Im gezeigten Ausführungsbeispiel können beide Endschalter 17, 18 für beide Endstellungen in der beschriebenen Weise verstellt werden, wie dies bevorzugt ist. In anderen Ausführungsformen könnte eine derartige Verstellung nur für einen Endschalter 17, 18 vorgesehen sein.

Die Gleiter 15 könnten auch in anderer Weise als beschrieben verschiebbar von den Zugstangen 14 geführt sein, z.B. in Längsnuten der Zugstangen eingreifen.

Die Gleiter 15 könnten sich anstelle einer Abstützung an einem Flanschteil 8 auch direkt an der Spindelmutter 3 abstützen. Denkbar und möglich wäre es auch, die Gleiter 15 unbeweglich mit der Spindelmutter 3 oder einem drehfest hiermit verbundenen Teil auszubilden. Beispielsweise könnte auch ein unverdrehbar mit der Spindelmutter 3 verbundenes Kunststoffteil vorgesehen sein, von dem Abschnitte die Gleiter 15 ausbilden.

Der Schlitten 22 könnte auch in anderer Weise als dargestellt verschiebbar von der mindetens einen Führungsschiene 24 geführt sein, beispielsweise eine stabförmig ausgebildete Führungsschiene teilweise oder vollständig umgeben.

Anstelle der gezeigten vier Zugstangen 14 ist es auch denkbar und möglich mehr oder weniger Zugstangen 14 vorzusehen, die an Ecken eines gedachten, die Spindel 2 umgebenden Polygons angeordnet sind. Obwohl eine Ausbildung mit nur zwei Zugstangen 14 denkbar und möglich ist, sind bevorzugterweise mindestens drei Zugstangen 14 vorhanden.

Auch Ausbildungen ohne Zugstangen 14 sind denkbar und möglich. Das Hüllrohr 10 könnte hierbei direkt am Gehäuse 1 oder einem an diesem angebrachten Anschlussteil 13 befestigt sein. Zur Ausbildung einer Verdrehsicherung könnten beispielsweise an der Spindelmutter 3 oder einem starr mit dieser verbundenen Teil gehaltene Gleitsteine vorgesehen sein, die sich am Hüllrohr, beispielsweise in dessen Eckbereichen, abstützen.

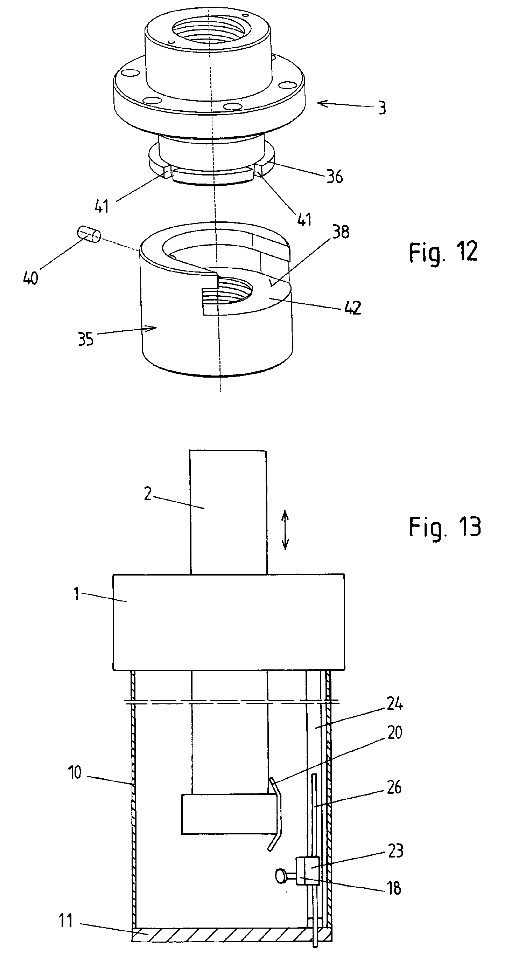

In der Zeichnung ist eine Ausführungsform der Erfindung dargestellt, bei der die Stelleinrichtung eine verdrehgesicherte Spindelmutter 3 aufweist, die durch Drehung der achsial unverschiebbar gehaltenen Spindel 2 in achsialer Richtung der Spindel 2 verstellt wird. Die Erfindung ist aber auch bei Ausführungsformen einsetzbar, bei denen die Spindelmutter 3 im Gehäuse 1 drehbar gelagert ist und achsial unverschiebbar gehalten ist und bei ihrer Drehung die gegen Verdrehung gesicherte Spindel 2 in deren Längsrichtung verstellt. Ein derartiges Ausführungsbeispiel ist stark schematisiert in Fig. 13 dargestellt. Analoge oder zumindest annähernd vergleichbare Teile sind mit den gleichen Bezugszeichen wie im zuvor beschriebenen Ausführungsbeispiel versehen. Das einen jeweiligen Endschalter 18 betätigende Auslöseteil 20 ist in diesem Fall an der Spindel 2 oder einem an dieser befestigten Teil angebracht, um von der Spindel 2 bei ihrer achsialen Verstellung mitgenommen zu werden. Ein jeweiliger Endschalter 18 ist ebenso von einem in Längsrichtung der Spindel 2 von einer gehäusefesten Führungsschiene 24 verschiebbar gelagerten Schlitten 23 getragen, der mittels einer Gewindestange 26 achsial verstellbar ist. Der dem Betätigungsende der Spindel 2 gegenüberliegend aus dem Gehäuse 1 herausragende Abschnitt der Spindel 2 ist in einem gehäusefesten Hüllrohr 10 angeordnet, das von einem Deckelteil 11 verschlossen ist. Das Deckelteil 11 weist eine Durchtrittsöffnung für die Gewindestange 26 auf, um von der Außenseite des Deckelteils 11 aus eine Verdrehung der Gewindestange 26 zu ermöglichen.

### Legende zu den Hinweisziffern:

- 1: Gehäuse
- 2: Spindel
- 3: Spindelmutter
- 4: Antriebsmotor
- 5: Motorwelle
- 6: Kupplung
- 7: Antriebswelle
- 8: Flanschteil
- 9: Schubrohr
- 10: Hüllrohr
- 11: Deckelteil
- 12: Dichtring
- 13: Anschlussteil
- 14: Zugstange
- 15: Gleiter
- 16: Aufnahmenut
- 17: Endschalter
- 18: Endschalter
- 19: Kipphebel
- 20: Auslöseteil
- 21: Rolle
- 22: Schlitten
- 23: Schlitten
- 24: Führungsschiene
- 25: Gewindestange
- 26: Gewindestange

- 27: Durchgangsbohrung
- 28: Endstück
- 29: Endstück
- 30: Werkzeugansatz
- 31: Werkzeugansatz
- 32: Halteteil
- 33: Klemmschraube
- 34: Lagerteil
- 35: Sicherheitsfangmutter
- 36: Ringflansch
- 37: Aufnahmeraum
- 38: Anschlagfläche
- 39: Anschlagfläche
- 40: Stift
- 41: Nut
- 42: Einführöffnung
- 43: Anschlussteil
- 44: Endstück
- 45: Fettkammer
- 46: Kammerteil
- 47: Zuführrohr
- 48: Begrenzungsstück
- 49: Zwischenraum
- 50: Schmiernippel
- 51: Bohrung

## Patentansprüche

1. Stelleinrichtung zum Positionieren einer Last mit einer Spindel (2) und einer auf dieser angeordneten Spindelmutter (3) sowie mindestens einem Endschalter (17, 18) zum Abschalten eines die Stelleinrichtung antreibenden Antriebsmotors (4) an einer vorgegebenen Stellposition, **dadurch gekennzeichnet, dass** der Endschalter (17, 18) von einem in Längsrichtung der Spindel (2) verschiebbar gelagerten Schlitten (22, 23) getragen ist, der eine Gewindebohrung aufweist, in deren Gewinde eine drehbar gelagerte, parallel zur Spindel (2) ausgerichtete Gewindestange (25, 26) eingreift, durch deren Drehung der Schlitten (22, 23) in Längsrichtung der Spindel (2) verstellbar ist.

2. Stelleinrichtung nach Anspruch 1, **dadurch gekennzeichnet, dass** der Schlitten (22, 23) von einer Führungsschiene (24) in Längsrichtung der Führungsschiene (24) verschiebbar gelagert ist.

3. Stelleinrichtung nach Anspruch 1 oder 2, **dadurch gekennzeichnet, dass** die Stelleinrichtung ein die Spindelmutter (3) oder die Spindel (2) drehbar lagerndes Gehäuse (1) aufweist.

4. Stelleinrichtung nach Anspruch 2 und Anspruch 3, **dadurch gekennzeichnet, dass** die Führungsschiene (24) fest mit dem Gehäuse (1) der Stelleinrichtung verbunden ist.

5. Stelleinrichtung nach einem der Ansprüche 2 bis 4, **dadurch gekennzeichnet, dass** die Führungsschiene (24) ein C-förmiges Querschnittsprofil aufweist.

6. Stelleinrichtung nach einem der Ansprüche 1 bis 5, **dadurch gekennzeichnet, dass** die Spindel (2) drehbar und achsial unverschiebbar gelagert ist und zur achsialen Verstellung der Spindelmutter (3) vom Antriebsmotor (4) drehbar ist.

7. Stelleinrichtung nach Anspruch 6, **dadurch gekennzeichnet, dass** mit der Spindelmutter (3) ein Schubrohr (9) verbunden ist, welches sich bei einer Drehung der Spindel (2) mit der Spindelmutter (3) in Längsrichtung der Spindel (2) verschiebt.

8. Stelleinrichtung nach Anspruch 7, **dadurch gekennzeichnet, dass** das Schubrohr (9) zumindest über einen Abschnitt seiner Längserstreckung in einem gegenüber der Spindel (2) achsial unverschiebbar gehaltenen Hüllrohr (10) liegt und aus diesem je nach Stellung der Spindelmutter (3) auf der Spindel (2) mehr oder weniger weit herausragt.

9. Stelleinrichtung nach Anspruch 7 oder 8, **dadurch gekennzeichnet, dass** ein verschiebbar im Schubrohr (9) geführtes Lagerteil (34) mit einem vom Gehäuse (1) abgelegenen Ende der Spindel (2) über ein Wälzlager drehbar verbunden ist.

10. Stelleinrichtung nach Anspruch 8 oder 9, **dadurch gekennzeichnet, dass** ein Endstück (28, 29) der Gewindestange (25, 26) in eine Durchgangsbohrung durch ein das Hüllrohr (10) am vom Gehäuse (1) abgelegenen Ende verschließendes Deckelteil (11) ragt und an seinem Ende einen Werkzeugansatz (30, 31) für ein Drehwerkzeug aufweist.

11. Stelleinrichtung nach einem der Ansprüche 6 bis 10, **dadurch gekennzeichnet, dass** ein Auslöseteil (20), das an der Spindelmutter (3) oder einem an dieser befestigten Teil (8) festgelegt ist, den Endschalter (17, 18) in der vorgesehenen Stellposition der Spindelmutter (3) betätigt.

12. Stelleinrichtung nach einem der Ansprüche 1 bis 11, **dadurch gekennzeichnet, dass** zum Abschalten des Antriebsmotors (4) in zwei Stellpositionen der Stelleinrichtung, die einen Stellweg der Stelleinrichtung beidseitig begrenzen, zwei Endschalter (17, 18) vorhanden sind, welche jeweils von einem in Längsrichtung der Spindel (2) verschiebbar gelagerten Schlitten (22, 23) getragen sind, der jeweils eine Gewindebohrung aufweist, in deren Gewinde eine drehbar gelagerte, parallel zur Spindel (2) ausgerichtete Gewindestange (25, 26) eingreift, durch deren Drehung der jeweilige Schlitten (22, 23) in Längsrichtung der Spindel (2) verstellbar ist.

13. Stelleinrichtung nach Anspruch 12, **dadurch gekennzeichnet, dass** beide Endschalter (17, 18) von einer gemeinsamen Führungsschiene (24) verschiebbar geführt sind.

14. Stelleinrichtung nach Anspruch 12 oder 13, **dadurch gekennzeichnet, dass** einer der Schlitten (22, 23) eine Durchgangsbohrung aufweist, durch die die mit der Gewindebohrung des anderen Schlittens (23) zusammenwirkende Gewindestange (26) mit Spiel durchtritt.
